# FASCICULE DE BREVET EUROPEEN

(11) **EP 3 328 710 B1**
(45) Date de publication et mention de la délivrance du brevet: **03.07.2019**
(21) Numéro de dépôt: 16756734.6
(22) Date de dépôt: 29.07.2016
(51) Int. Cl.: B62D 1/16, B62D 1/20

(54) **JOINT DE TABLIER POUR L'ACCOUPLEMENT D'UN DISPOSITIF DE DIRECTION ASSISTÉE AU TABLIER D'UN VÉHICULE**
INSTRUMENTENTAFELDICHTUNG ZUR ANKOPPLUNG EINER SERVOLENKVORRICHTUNG AN DAS ARMATURENBRETT EINES FAHRZEUGS
DASHBOARD GASKET FOR COUPLING A POWER-STEERING DEVICE TO THE DASHBOARD OF A VEHICLE

(30) Priorité: 31.07.2015 FR 1557391
(43) Date de publication de la demande: 06.06.2018
(73) Titulaire: Jtekt Europe, 69540 Irigny (FR)
(72) Inventeur: REY, Laurent, 69100 Villeurbanne (FR)
(74) Mandataire: Chevalier, Renaud Philippe
(86) Numéro de dépôt international: PCT/FR2016/051984
(87) Numéro de publication internationale: WO 2017/021638

(56) Documents cités:
- EP-A1- 0 213 977
- DE-A1-102006 008 849
- DE-U1- 9 405 633

## Description

La présente invention concerne le domaine général des dispositifs de direction pour véhicules, et notamment des dispositifs de direction assistée, et traite plus particulièrement de l'assemblage des modules de direction sur des véhicules.

De manière connue en soi, un dispositif de direction comprend généralement une crémaillère de direction, qui est montée en translation dans un carter de direction fixé au châssis du véhicule, et dont les extrémités gauche et droite sont reliées chacune, par l'intermédiaire d'une biellette de direction, à un porte-fusée portant une roue directrice, si bien que le déplacement en translation de la crémaillère entraîne la modification de l'angle de lacet (angle de braquage) desdites roues directrices.

Un tel dispositif de direction comprend également une colonne de direction, dont une extrémité est pourvue d'un pignon qui engrène sur la crémaillère de direction, et dont l'autre extrémité est pourvue d'un volant de conduite, qui permet à un conducteur installé dans l'habitacle du véhicule de manoeuvrer le dispositif de direction.

Le dispositif de direction étant généralement logé dans le compartiment moteur situé à l'avant du véhicule, il est nécessaire que la colonne de direction traverse la cloison, dite « tablier », qui sépare ledit compartiment moteur de l'habitacle.

Afin d'éviter la perte du lubrifiant présent dans le carter de direction, mais également pour préserver le dispositif de direction, ainsi que l'habitacle, de la corrosion et de l'encrassement, en empêchant l'intrusion d'eau et de poussière dans ledit carter de direction, respectivement dans ledit habitacle, il est nécessaire de réaliser une jonction étanche entre le carter de direction et le tablier.

A cet effet, il est connu d'usiner le carter de direction pour y créer un siège, de type alésage, dans lequel on loge un premier joint à lèvre, dont la ou les lèvres épousent la colonne de direction.

Il est également connu de compléter l'étanchéité de la jonction en interposant et en comprimant entre le carter de direction et le tablier un second joint statique plat.

Si un tel agencement donne généralement satisfaction quant à l'étanchéité obtenue, il peut toutefois présenter certains inconvénients.

Tout d'abord, la réalisation de la jonction étanche nécessite de réaliser un usinage relativement précis du carter de direction pour accueillir le joint à lèvre, ce qui complique la fabrication et augmente le coût du dispositif.

Ensuite, la mise en place des différents joints rend parfois délicat le montage du dispositif de direction sur le véhicule, puisque l'opération de montage comporte notamment un risque de déplacer par inadvertance ou de pincer l'un ou l'autre des joints, et ainsi d'endommager le joint concerné, d'en réduire la durée de vie, ou bien de provoquer d'emblée un défaut d'étanchéité.

En outre, en fonction des tolérances de fabrication et d'assemblage, l'assiette (c'est-à-dire l'inclinaison en tangage et en roulis) du carter de direction par rapport au tablier peut varier d'un véhicule à l'autre, si bien que le joint statique peut être comprimé de façon inégale, ce qui peut, ici encore, endommager localement ledit joint statique au détriment de sa durée de vie, ou bien créer des faiblesses d'étanchéité dans certaines zones.

Le document EP 0 213 977 A1 est considéré comme le document le plus proche de l'objet de la revendication indépendante 1 et le document DE 10 2006 008 849 A1 de l'objet de la revendication indépendante 10.

Les objets assignés à l'invention visent par conséquent à proposer une nouvelle forme d'accouplement entre carter de direction et tablier de véhicule qui facilite l'assemblage, à moindre coût, d'un dispositif de direction au sein d'un véhicule tout en garantissant, de manière reproductible et durable, une excellente étanchéité.

Les objets assignés à l'invention sont atteints au moyen d'un véhicule comprenant un habitacle destiné à accueillir au moins un conducteur, ledit véhicule étant équipé d'un dispositif de direction qui comprend un mécanisme de direction protégé par un carter de direction, ledit carter de direction étant lui-même logé dans un compartiment du véhicule, tel qu'un compartiment moteur, qui est séparé de l'habitacle par au moins une cloison dite "tablier", le dispositif de direction comprenant également un volant de conduite, situé dans l'habitacle, volant de conduite auquel le mécanisme de direction est raccordé au moyen d'une colonne de direction qui émerge du carter de direction et qui traverse le tablier, ledit véhicule étant caractérisé en ce qu'il comporte, pour assurer l'étanchéité autour de la colonne de direction, entre le carter de direction et le tablier, un joint d'accouplement en matériau élastomère qui comprend d'un seul tenant d'une part un premier anneau d'étanchéité, central, qui entoure et enserre ladite colonne de direction et à travers lequel la colonne de direction traverse le joint d'accouplement, et d'autre part un second anneau d'étanchéité, périphérique, qui est interposé entre le carter de direction et le tablier, à distance et autour du premier anneau d'étanchéité, le carter de direction étant pourvu d'un organe de respiration poreux et hydrophobe, perméable à l'air mais imperméable à l'eau, agencé pour permettre un équilibrage de pression entre l'intérieur du carter de direction et l'extérieur dudit carter de direction, le joint d'accouplement comprend, entre le premier anneau d'étanchéité et le second anneau d'étanchéité, un évent qui traverse ledit joint d'accouplement selon son épaisseur, en vis-à-vis de l'organe de respiration, afin de permettre des échanges gazeux entre le carter de direction et l'habitacle du véhicule.

Avantageusement, la mise en oeuvre d'un joint d'accouplement selon l'invention, c'est-à-dire d'un joint d'accouplement monolithique qui réunit en une seule et même pièce à la fois un premier anneau d'étanchéité et un second anneau d'étanchéité, permet de rassembler au sein d'un seul et même joint d'accouplement plusieurs fonctions d'étanchéité, à savoir une première fonction d'étanchéité entre le carter de direction et la colonne de direction, première fonction d'étanchéité qui est réalisée au moyen du premier anneau d'étanchéité, et une seconde fonction d'étanchéité, complémentaire de la première, entre le carter de direction et le tablier, seconde fonction d'étanchéité qui est réalisée au moyen du second anneau d'étanchéité.

Il devient ainsi notamment possible d'accoupler le dispositif de direction au tablier de manière particulièrement simple et rapide, en utilisant un seul et même joint d'accouplement pour former une interface à la fois souple et étanche entre d'une part le carter de direction, contenu dans le compartiment moteur, et d'autre part le tablier qui donne accès à l'habitacle.

En outre, le premier anneau d'étanchéité et le second anneau d'étanchéité peuvent avantageusement présenter leur propre capacité d'adaptation par déformation élastique, notamment par déformation élastique radiale (transversalement, voire sensiblement perpendiculairement, à l'axe longitudinal de la colonne de direction) pour le premier anneau et par déformation élastique axiale (sensiblement parallèlement à l'axe longitudinal de la colonne de direction) pour le second anneau, ce qui permet auxdits anneaux d'étanchéité d'accommoder respectivement, et de manière relativement indépendante l'un de l'autre, la forme et les déplacements de la colonne de direction pour le premier anneau d'étanchéité, et la position et l'inclinaison du tablier par rapport au carter de direction pour le second anneau d'étanchéité.

Enfin, l'utilisation d'un joint d'accouplement unique et stable limite considérablement le risque global de chute dudit joint d'accouplement, ou bien encore le risque d'un mauvais positionnement ou d'un glissement accidentel d'un anneau d'étanchéité par rapport à l'autre, lorsque l'on manipule le carter de direction pendant les opérations d'assemblage.

Ainsi, on réduit significativement les risques d'endommagement du joint d'accouplement ou d'apparition d'un défaut d'étanchéité lors de la mise en place du carter de direction contre le tablier.

Grâce à l'invention, les opérations de montage du dispositif de direction au sein du véhicule sont donc grandement facilitées et fiabilisées.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue schématique de côté, l'implantation, selon l'invention, d'un dispositif de direction au sein d'un véhicule.
La figure 2 illustre, selon une vue d'ensemble en perspective, un dispositif de direction assistée dont le carter de direction est pourvu d'un joint d'accouplement selon l'invention.
La figure 3 illustre, selon une vue de détail en coupe longitudinale le long de l'axe de rotation de la colonne de direction, le dispositif de direction de la figure 2 accouplé contre le tablier du véhicule.
La figure 4 illustre, selon une vue d'ensemble en perspective, le joint d'accouplement utilisé sur les figures 2 et 3.
La figure 5 illustre, selon une vue de dessus dans un plan perpendiculaire à l'axe longitudinal (axe de rotation) de la colonne de direction, le joint d'accouplement de la figure 3.
La figure 6 illustre, selon une vue partielle en coupe latérale E-E, le joint d'accouplement de la figure 5.
La figure 7 illustre, selon une vue de dessus dans le plan du tablier, le joint d'accouplement des figures 5 et 6.
La figure 8 illustre, selon une vue en coupe latérale F-F, le joint d'accouplement de la figure 7.

La présente invention concerne un véhicule 1, de préférence un véhicule 1 automobile, destiné par exemple au transport de personnes.

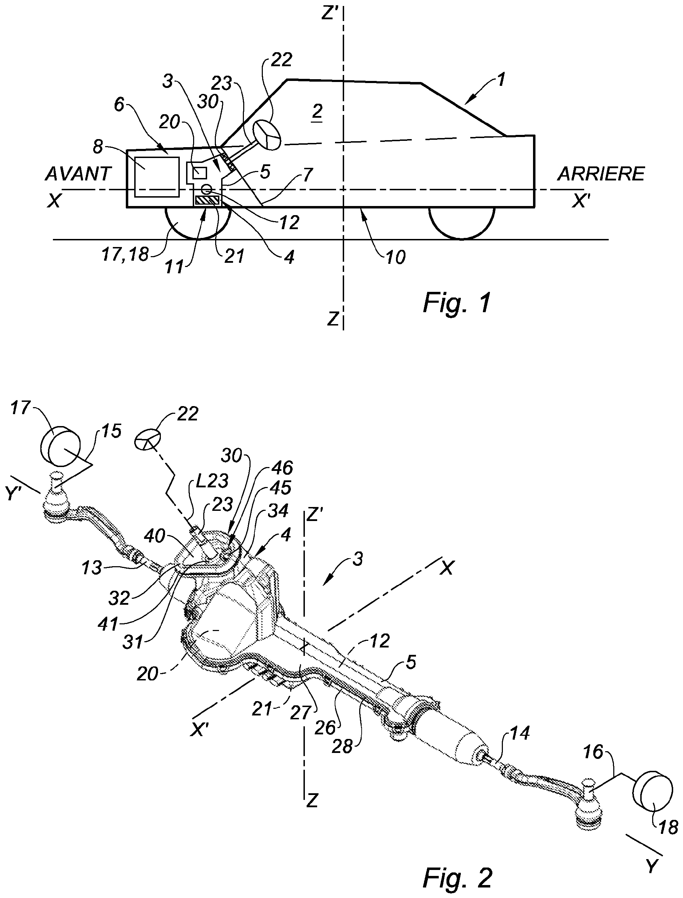

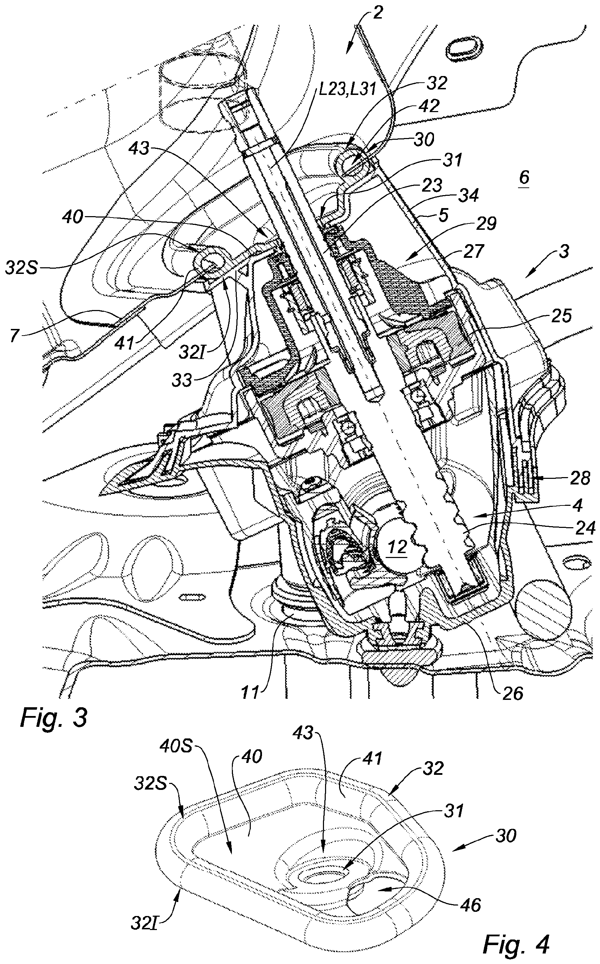

Tel que cela est illustré sur les figures 1 et 3, ledit véhicule 1 comprend un habitacle 2 destiné à accueillir au moins un conducteur, et, le cas échéant, un ou plusieurs passagers.

Le véhicule 1 est équipé d'un dispositif de direction 3 qui comprend un mécanisme de direction 4 protégé par un carter de direction 5.

Ledit carter de direction 5 est lui-même logé dans un compartiment 6 du véhicule, tel qu'un compartiment moteur 6, qui est séparé de l'habitacle 2 par au moins une cloison 7 dite "tablier".

De préférence, tel que cela est illustré sur la figure 1, le compartiment 6 qui accueille le carter de direction 5 est un compartiment moteur, dans lequel se trouve le moteur de propulsion 8 destiné à propulser le véhicule 1.

Le carter de direction 5 peut alors avantageusement prendre place sous le moteur de propulsion 8, et être fixé au châssis 10 du véhicule 1, par exemple au niveau d'un berceau 11 appartenant au soubassement dudit châssis 10.

Ceci étant, l'invention reste parfaitement applicable à d'autres types de configuration, et notamment à un véhicule 1 au sein duquel le compartiment 6 serait destiné à un autre usage, et formerait par exemple un compartiment à bagages.

De manière connue en soi, le mécanisme de direction 4 comprend de préférence, tel que cela est visible sur la figure 2, une crémaillère de direction 12, qui est montée (et guidée) en translation dans le carter de direction 5, et dont les extrémités gauche et droite sont reliées chacune, par l'intermédiaire d'une biellette de direction 13, 14, à un porte-fusée 15, 16 portant une roue directrice (et de préférence motrice) 17, 18, si bien que le déplacement en translation de la crémaillère 12 entraîne la modification de l'angle de lacet (angle de braquage) desdites roues directrices 17, 18.

De préférence, la translation de la crémaillère 12 s'opère selon l'axe longitudinal de la crémaillère (YY'), qui est de préférence sensiblement confondu avec l'axe transverse droite-gauche du véhicule 1.

On notera par ailleurs (XX') l'axe longitudinal avant-arrière, et (ZZ') l'axe vertical bas-haut qui forment avec l'axe transverse (YY') un trièdre direct.

De préférence, le dispositif de direction 3 est un dispositif de direction assistée qui comporte également un moteur d'assistance 20, de préférence un moteur d'assistance électrique, par exemple de type « brushless », piloté par un calculateur 21 et agencé pour assister la manoeuvre du mécanisme de direction 4 selon des lois d'assistance prédéterminées, stockées dans une mémoire non volatile dudit calculateur 21.

Tel que cela est illustré sur les figures 1 et 2, le dispositif de direction 3 comprend également un volant de conduite 22, situé dans l'habitacle 2, volant de conduite 22 auquel le mécanisme de direction 4 est raccordé au moyen d'une colonne de direction 23 qui émerge du carter de direction 5 et qui traverse le tablier 7, tel que cela est détaillé sur la figure 3.

La colonne de direction 23 est également pourvue, à son extrémité opposée à l'extrémité portant le volant 22, d'un pignon d'entraînement 24 qui engrène sur la crémaillère 12.

Le moteur d'assistance 20 peut indifféremment agir sur la crémaillère 12 de manière indirecte, par l'intermédiaire d'un réducteur 25, tel qu'un réducteur à roue tangente et vis sans fin, qui vient en prise sur la colonne de direction 23, tel que cela est illustré sur la figure 3, ou bien encore de façon directe, par exemple au moyen d'un second pignon distinct et distant du pignon d'entraînement 24 (le mécanisme de direction 4 formant ainsi un mécanisme dit « à double pignon ») ou au moyen d'une vis à billes.

De préférence, le carter de direction 5 sera formé par une coque obtenue en réunissant une portion de coque inférieure 26, formant embase 26, et une portion de coque supérieure 27, formant cloche 27, qui vient coiffer ladite embase 26.

De préférence, la cloche 27, et plus préférentiellement aussi bien la cloche 27 que l'embase 26, sont réalisées en polymère thermoplastique, rigide ou semi-rigide, c'est-à-dire présentant typiquement un module d'Young supérieur à 3 GPa, au moins sur la plage prévisible de températures de fonctionnement du dispositif 1 de direction, c'est-à-dire au moins sur la plage allant de -40°C à +125°C.

A titre indicatif et non limitatif, on pourra notamment utiliser comme matériaux polymères, pour former la cloche 27 et/ou l'embase 26 : un Polyamide (PA), un Polyamide aromatique (PPA), un Polybuthylene Terephatlate (PBT), un Polyéthylène Térephtalate (PET), un Polypropylène (PP), ou une Polycétone (PK), le matériau polymère étant éventuellement renforcé de fibres.

La fabrication des portions de coque 26, 27, et plus globalement du carter de direction 5, peut ainsi être réalisée simplement et à moindre coût par moulage. En outre, le carter de direction 5 ainsi obtenu est particulièrement léger.

La cloche 27 est fixée sur l'embase 26, par exemple par collage ou thermo-soudage, selon une jonction étanche 28, de manière à recouvrir au moins en partie le mécanisme de direction 4 d'une enveloppe étanche, qui délimite une enceinte 29 protectrice.

De préférence, le moteur d'assistance 20 et le calculateur 21 sont également placés à l'abri dans l'enceinte 29.

Avantageusement, la coque 26, 27, et plus globalement le carter de direction 5, évitent au lubrifiant du mécanisme de direction 4 de s'échapper de l'enceinte 29, et forment une barrière étanche qui protège le mécanisme de direction 4, et plus globalement tout organe placé dans l'enceinte 29, au moins contre l'intrusion de poussière, de granulat (notamment de grains de sels ou de sable), d'eau liquide, et de brouillard salin.

On désigne par « brouillard salin » les gouttelettes d'eau salée en suspension dans l'air, qui peuvent notamment apparaître lorsque le véhicule 2 circule à proximité d'un littoral marin, ou bien sur une route enneigée traitée par du sel.

Selon l'invention, et tel que cela est illustré notamment sur la figure 3, le véhicule 1 comporte, pour assurer l'étanchéité autour de la colonne de direction 23, entre le carter de direction 5 et le tablier 7, un joint d'accouplement 30 en matériau élastomère qui comprend d'un seul tenant d'une part un premier anneau d'étanchéité 31, central, qui entoure et enserre ladite colonne de direction 23 et à travers lequel la colonne de direction 23 traverse le joint d'accouplement 30, et d'autre part un second anneau d'étanchéité 32, périphérique, qui est interposé entre le carter de direction 5 et le tablier 7, à distance et autour du premier anneau d'étanchéité 31.

Ainsi, le premier anneau d'étanchéité 31 tient lieu de premier joint, et donc de première barrière étanche, qui épouse la colonne de direction 23 afin d'assurer une première jonction étanche entre le carter de direction 5 et ladite colonne de direction 23.

Grâce au premier anneau d'étanchéité 31, la colonne de direction 23 peut ainsi traverser le joint d'accouplement 30, dans le sens de l'épaisseur dudit joint d'accouplement 30, tout en coopérant de façon étanche avec ce dernier.

De même, le second anneau d'étanchéité 32, tient lieu de second joint, et donc de seconde barrière étanche, en assurant une seconde jonction étanche entre le carter de direction 5 et le tablier 7.

A ce titre, ledit second anneau d'étanchéité 32 vient de préférence au contact du tablier 7 par sa face supérieure 32S, et au contact du carter de direction 5 par sa face inférieure 32I opposée à la face supérieure 32S, afin d'être comprimé entre le carter de direction 5 et le tablier 7, ici selon une direction de compression qui correspond sensiblement à l'épaisseur E32 du second anneau d'étanchéité 32, et plus globalement qui correspond sensiblement à la direction axiale définie par l'axe longitudinal L23 de la colonne de direction 23.

En pratique, le joint d'accouplement 30, et plus particulièrement son second anneau d'étanchéité 32, périphérique, formera donc une interface d'accouplement étanche et élastiquement compressible entre le carter de direction 5 (et plus précisément la partie supérieure dudit carter de direction 5) et le tablier 7 (et plus précisément le dessous du tablier 7).

Par commodité de description, on désignera par « axiale » une direction ou une dimension considérée selon une orientation sensiblement parallèle à, voire confondue avec, un axe de référence considéré, ici par défaut l'axe longitudinal L23 de la colonne de direction 23, et par « radiale » une direction ou une dimension considérée transversalement, et plus particulièrement sensiblement perpendiculairement, audit axe de référence considéré, ici par défaut l'axe longitudinal L23.

A titre d'exemple non limitatif, on pourra utiliser, comme matériau élastomère constitutif du joint d'accouplement 30, et plus particulièrement comme matériau élastomère constitutif du premier anneau d'étanchéité 31 et du second anneau étanchéité 32, un caoutchouc naturel (NR), un éthylène-propylène-diène monomère (EPDM), un caoutchouc Nitrile-Butadiène (NBR), un caoutchouc Nitrile-Butadiène Hydrogénés (HNBR), ou un silicone.

De préférence, tel que cela est illustré sur les figures 2 et 3, le joint d'accouplement 30, et plus particulièrement la face inférieure 32I du second anneau d'étanchéité 32, repose, sensiblement à plat et de façon très stable, sur le plateau terminal 33 d'une cheminée 34 qui s'étend le long et autour de la colonne de direction 23 et qui appartient au carter de direction 5, et plus préférentiellement qui est formée d'un seul tenant avec la cloche 27.

Ledit plateau terminal 33 est avantageusement sécant, et de préférence sensiblement perpendiculaire, à l'axe longitudinal L23 de ladite colonne de direction 23, ce qui procure une excellente assise au joint d'accouplement 30.

On notera que, par simple commodité de représentation, le second anneau d'étanchéité 32 est représenté sur la figure 3 sous sa forme au repos, c'est-à-dire non compressée. En réalité, ledit second anneau d'étanchéité 32, pris en sandwich entre le plateau terminal 33 du carter de direction 5 et le tablier 7, subit bien entendu une déformation par compression axiale, c'est-à-dire un écrasement (non représenté), pour accommoder élastiquement le rapprochement mutuel du carter de direction 5 et du tablier 7.

Avantageusement, les jonctions étanches procurées par le joint d'accouplement 30 assurent une étanchéité au moins à l'encontre des fuites de lubrifiant depuis le mécanisme de direction 4 vers l'extérieur du carter de direction 5, et à l'encontre de l'intrusion, dans l'enceinte 29, de poussière, de granulat, d'eau liquide et de brouillard salin, typiquement à des pressions comprises entre 1 bar (pression atmosphérique normale) et au moins 3 ou 4 bars, voire davantage (pour résister notamment au jet d'eau d'un nettoyeur haute pression).

Tel que cela est bien visible sur les figures 2, 4, 5 et 7, le premier anneau d'étanchéité 31 et le second anneau d'étanchéité 32 entourent chacun l'axe longitudinal L23 de la colonne de direction de façon continue, c'est-à-dire suivent un contour fermé qui couvre 360 degrés autour dudit axe longitudinal L23 (dans un plan normal audit axe L23).

De préférence, le premier anneau d'étanchéité 31 peut présenter sensiblement une forme de révolution, et suivre ainsi un contour sensiblement circulaire autour de l'axe longitudinal L23.

Le second anneau d'étanchéité 32 peut quant à lui présenter de préférence une forme sensiblement polygonale, qui suit une ligne brisée, formée d'une succession de segments de droite et/ou de portions courbes, autour de ce même axe longitudinal L23, tel que cela est bien visible sur les figures 2, 4, 5 et 7.

Quelles que soient les formes respectives des premier et second anneau d'étanchéité 31, 32, le premier anneau d'étanchéité 31 se trouve en position "centrale", par opposition à la situation "périphérique" du second anneau d'étanchéité 32, c'est-à-dire que le premier anneau d'étanchéité 31 est radialement plus proche de l'axe longitudinal L23 que ne l'est le second anneau d'étanchéité 32, lui-même radialement plus éloigné dudit axe longitudinal L23, de telle manière que le premier anneau périphérique 31, central, est contenu à l'intérieur du périmètre (d'étanchéité) défini par le second anneau d'étanchéité 32, périphérique.

De façon particulièrement préférentielle, ledit premier anneau d'étanchéité 31 se trouve en retrait radialement dudit second anneau d'étanchéité 32 dans toutes les directions azimutales, c'est-à-dire dans toutes les directions perpendiculaires à l'axe longitudinal L23.

Une telle disposition centrale du premier anneau d'étanchéité 31 confère notamment au joint d'accouplement 30 une forme compacte et robuste, qui permet avantageusement d'assembler et de maintenir facilement le joint d'accouplement 30 sur le carter de direction 5.

En effet, l'agencement proposé permet d'enfiler le joint d'accouplement 30 sur la colonne de direction 23 (par le premier anneau d'étanchéité 31) puis de faire glisser ledit joint d'accouplement 30 le long de la colonne de direction 23 jusqu'à la mise en butée dudit joint d'accouplement 30 contre le plateau terminal 33.

Le joint d'accouplement 30 étant alors retenu à la fois par la colonne de direction 23 et par le plateau terminal 33, il est possible de manipuler le sous-ensemble carter 5/joint 30 ainsi formé sans risque de faire tomber le joint d'accouplement 30, notamment lorsque l'on rapporte ensuite ledit sous-ensemble contre le tablier 7.

De préférence, le premier anneau d'étanchéité 31, central, forme un joint racleur au contact et à l'intérieur duquel la colonne de direction 23 peut se déplacer au moins en rotation en lacet, autour de son axe longitudinal L23.

Plus particulièrement, la paroi radialement interne du premier anneau d'étanchéité 31 vient ainsi épouser, et frotter contre, la surface latérale radialement externe de la colonne de direction 23, selon un contact continu qui s'étend à 360 degrés autour de l'axe longitudinal L23 de ladite colonne de direction 23.

Ainsi, le premier anneau d'étanchéité 31, solidaire du carter de direction 5, assure de préférence une étanchéité dynamique, en autorisant des mouvements relatifs, par glissement, notamment en rotation alternée et/ou en translation axiale le long de l'axe longitudinal L23, de la colonne de direction 23 par rapport au joint d'accouplement 30, et donc plus globalement par rapport au carter de direction 5, et par rapport au tablier 7, sans perte de contact ni d'étanchéité.

Par comparaison, le second anneau d'étanchéité 32 assurera de préférence une étanchéité statique entre le carter de direction 5 et le tablier 7, sa position restant fixe par rapport audit carter de direction 5 et audit tablier 7, une fois le dispositif de direction 3 fixé dans le véhicule 1.

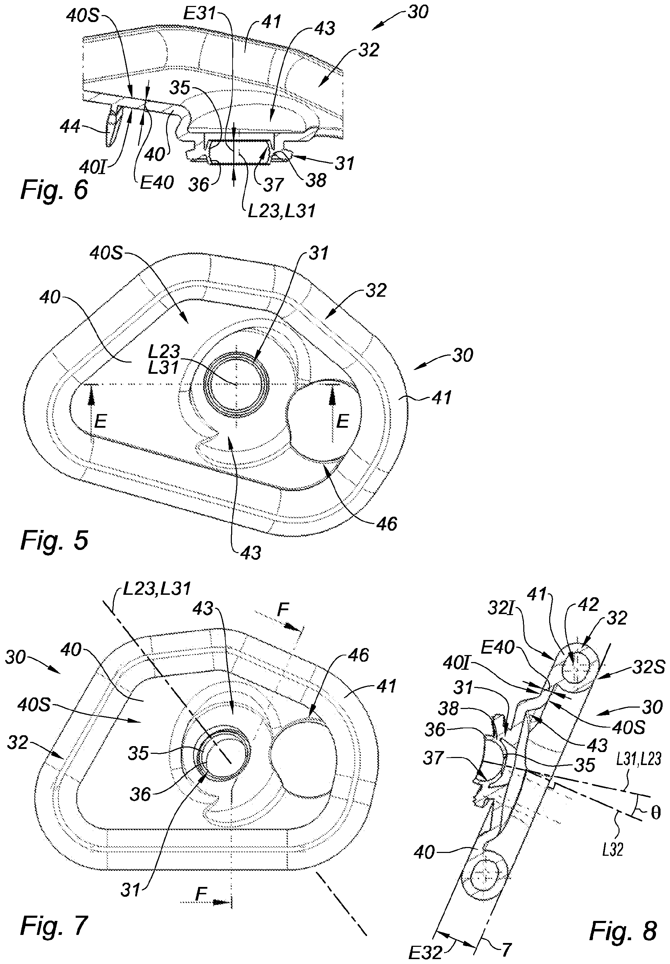

Plus préférentiellement, le premier anneau d'étanchéité 31, central, forme un joint à lèvre(s), tel que cela est bien visible sur les figures 6 et 8, dont la ou les lèvres 35, 36 viennent frotter contre la surface (latérale) externe de la colonne de direction 23.

Un tel joint à lèvres permet avantageusement d'obtenir, au moyen d'un agencement d'anneau d'étanchéité 31 simple et robuste, une étanchéité dynamique fiable et durable, sur un grand nombre de cycles d'utilisation, par contact glissant des lèvres 35, 36 (annulaires) contre la colonne de direction 23.

De préférence, tel que cela est bien visible sur les figures 6 et 8, le premier anneau d'étanchéité présente deux lèvres 35, 36, qui correspondent chacune à une portion d'hémisphère d'une même zone sphérique 37.

La première lèvre 35, orientée vers le tablier 7, correspond ici à une lèvre supérieure, formant - par analogie avec le globe terrestre - une portion d'hémisphère nord, comprise entre l'équateur de la zone sphérique 37 et un parallèle nord, tandis que la seconde lèvre 36, orientée vers le carter de direction 5 et donc décalée axialement par rapport à la première lèvre 35 le long de l'axe longitudinal L23 de la colonne de direction 23, correspond ici à une lèvre inférieure, formant une portion d'hémisphère sud, comprise entre l'équateur de la zone sphérique 37 et un parallèle sud.

Avantageusement, la mise en oeuvre de deux lèvres 35, 36 générées par une zone sphérique 37 confère au premier anneau d'étanchéité 31 une excellente capacité à épouser élastiquement la forme de la colonne de direction 23, et à accompagner, le cas échéant, les modifications d'orientation de l'axe longitudinal L23 de ladite colonne de direction 23, notamment en tangage et en roulis, ce qui garantit le maintien permanent d'un contact étanche.

En outre, un tel joint à lèvres de forme sphérique est avantageusement facile à réaliser par moulage.

Enfin, un tel agencement de joint à lèvres permet de stocker et de retenir un lubrifiant, et plus particulièrement de la graisse, dans l'espace compris axialement entre la première lèvre 35 et la seconde lèvre 36 (et compris radialement entre lesdites lèvres 35, 36 et la colonne de direction 23), afin d'améliorer l'étanchéité et, surtout, de faciliter les mouvements de la colonne de direction 23 dans le premier anneau d'étanchéité 31.

De préférence, la zone sphérique 37 est attachée et suspendue élastiquement au joint d'accouplement 30 par un pont de raccordement 38, annulaire, qui entoure l'équateur de ladite zone sphérique 37 et qui est formé d'un seul tenant avec le joint d'accouplement 30.

Ici encore, cette suspension "équatoriale" de la zone sphérique 37 par un pont de raccordement 38 souple permet aux lèvres 35, 36, et plus globalement au premier anneau d'étanchéité 31, d'accompagner élastiquement, par une adaptation de l'assiette dudit premier anneau d'étanchéité 31 (c'est-à-dire par une adaptation de l'inclinaison en tangage et en roulis), d'éventuelles variations d'orientation de l'axe longitudinal L23 de la colonne de direction 23.

La configuration du premier anneau d'étanchéité 31 au sein du joint d'accouplement 30 peut ainsi s'adapter automatiquement aux éventuels mouvements oscillants de basculement de l'axe longitudinal L23 de la colonne de direction 23 liés au fonctionnement normal du dispositif de direction 3, ou bien encore aux différentes conditions d'assemblage rencontrées, en raison des tolérances de fabrication, d'un mécanisme de direction 4 à l'autre (c'est-à-dire d'un véhicule 1 à l'autre).

En d'autres termes, grâce à la flexibilité des lèvres 35, 36 et du pont de raccordement 38, qui procurent une liaison au comportement proche d'une liaison rotule, l'axe central L31 du premier anneau d'étanchéité 31, dit « premier axe central L31 », c'est-à-dire ici l'axe central (nord-sud) de la zone sphérique 37, pourra en pratique s'aligner automatiquement et en permanence avec l'axe longitudinal L23 de la colonne de direction 23 (elle-même rigide, et de préférence métallique), de sorte à être sensiblement confondu avec ledit axe longitudinal L23.

Par commodité de description, on pourra donc assimiler l'axe longitudinal L23 de la colonne de direction 23 avec l'axe central L31 du premier anneau d'étanchéité 31.

De préférence, tel que cela est notamment visible sur les figures 2 à 8, le premier anneau d'étanchéité 31, central, est raccordé au second anneau d'étanchéité 32, périphérique, par une nappe 40.

De préférence, ladite nappe 40 se présente sensiblement sous la forme d'une feuille, d'épaisseur E40 sensiblement constante, du matériau polymère constitutif du joint d'accouplement 30.

Avantageusement, ladite nappe 40, qui s'étend radialement (c'est-à-dire transversalement, voire sensiblement perpendiculairement, à l'axe longitudinal L23) depuis le premier anneau d'étanchéité 31 jusqu'au second anneau d'étanchéité 32, assure une liaison matérielle entre ledit premier anneau d'étanchéité 31 et le second anneau d'étanchéité 32, et donc garantit la cohésion du joint d'accouplement 30, au sein duquel le premier et le second anneau d'étanchéité 31, 32 sont ainsi solidairement attachés l'un à l'autre.

Ceci étant, l'utilisation d'une nappe 40 intermédiaire pour relier entre eux le premier et le second anneau d'étanchéité 31, 32, permet cependant de préserver également une certaine indépendance de comportement du second anneau d'étanchéité 32 par rapport au premier anneau d'étanchéité 31 (et réciproquement), de telle sorte que, bien qu'étant liés au sein du même joint d'accouplement 30, le premier anneau d'étanchéité 31 et le second anneau d'étanchéité 32 possèdent chacun une liberté de déformation élastique propre, indépendante de la capacité de déformation et de l'état de déformation de l'autre anneau d'étanchéité 32, 31.

La nappe 40 forme ainsi une sorte de zone tampon entre le premier anneau d'étanchéité 31 et le second anneau d'étanchéité 32, zone tampon qui permet notamment au premier anneau d'étanchéité 31 d'accommoder élastiquement une déformation (ici une dilatation) radiale provoquée par l'insertion en force de la colonne de direction 23 dans ledit premier anneau d'étanchéité 31, sans interférer avec la capacité de déformation élastique (ici en compression) axiale du second anneau d'étanchéité 32, qui permet audit second anneau d'étanchéité 32 d'accommoder librement le rapprochement axial du carter de direction 5 vers le tablier 7.

De préférence, le second anneau d'étanchéité 32, périphérique, suit et délimite le contour terminal, radialement externe, de la nappe 40, et plus globalement du joint d'accouplement 30, c'est-à-dire forme le bord latéral externe dudit joint d'accouplement 30.

De façon préférentielle, tel que cela est bien visible sur la figure 8, la nappe 40 est d'une épaisseur E40 moindre que l'épaisseur E32 du second anneau d'étanchéité 32, périphérique (et plus particulièrement que l'épaisseur E32 au repos dudit second anneau périphérique, avant compression axiale de ce dernier entre le carter de direction 5 et le tablier 7).

En d'autres termes, la nappe 40 est, au moins au repos, c'est-à-dire au moins avant que le joint d'accouplement 30 ne soit pressé entre le carter de direction 5 et le tablier 7, plus fine (axialement) que le second anneau d'étanchéité 32, qui forme ainsi un renflement (au moins axial) par rapport à ladite nappe 40.

De même, l'épaisseur E40 de la nappe est préférentiellement inférieure à l'épaisseur axiale (au moins au repos) E31 du premier anneau d'étanchéité 31, et en particulier inférieure à l'épaisseur (l'étendue axiale) de la portion sphérique 37 constitutive des lèvres 35, 36.

Un tel agencement de nappe 40 fine permet tout d'abord de réaliser une économie de matière, puisqu'une faible quantité de matériau est suffisante pour réaliser le joint d'accouplement 30 d'un seul tenant. Une telle économie de matière permet avantageusement d'alléger le joint d'accouplement 30 et d'en réduire le coût de fabrication.

Ensuite, l'utilisation d'une nappe 40 fine, et par conséquent flexible, garantit une certaine souplesse du lien entre le premier anneau d'étanchéité 31 et le second anneau d'étanchéité 32, ce qui favorise l'indépendance du comportement en déformation de chacun desdits anneaux d'étanchéité 31, 32 par rapport à l'autre anneau d'étanchéité 32, 31.

En outre, en prévoyant une épaisseur E32 du second anneau d'étanchéité supérieure à l'épaisseur E40 de la nappe 40, on s'assure que le second anneau d'étanchéité 32, et plus particulièrement sa face supérieure 32S, fait saillie (axialement) par rapport à la nappe 40, et entre donc au contact du tablier 7 avant la nappe 40, voire que la nappe 40 reste en retrait du tablier 7, même après le montage du dispositif de direction 3 au sein du véhicule 1.

En d'autres termes, la mise en compression axiale du second anneau d'étanchéité 32 entre le carter de direction 5 et le tablier 7 intervient avant une éventuelle mise en compression axiale de la nappe 40 entre le carter de direction 5 et le tablier 7.

On maîtrise donc la position et l'étendue de la zone de contact entre le joint d'accouplement 30 et le tablier 7, zone de contact qui se limite de préférence à la face supérieure 32S du second anneau d'étanchéité 32, sans s'étendre à la face supérieure 40S de la nappe 40. L'invention permet donc de mieux maîtriser la réalisation de l'étanchéité.

De même, en prévoyant un second anneau d'étanchéité 32 plus épais que la nappe 40, en saillie de ladite nappe 40, on permet au second anneau d'étanchéité 32 de se déformer, et notamment de se comprimer en épaisseur, avant que la nappe 40 ne soit elle-même comprimée contre le tablier 7.

En d'autres termes, un tel agencement ménage une réserve de déformation (une amplitude potentielle de déformation axiale libre) pour le second anneau d'étanchéité 32, de telle sorte que le joint d'accouplement 30 peut se déformer (s'écraser) de manière différentielle, l'écrasement du second anneau d'étanchéité 32 intervenant avant l'écrasement éventuel de la nappe 40, et sans être perturbé par la présence de ladite nappe 40.

Ici encore, l'agencement proposé favorise la maîtrise de la position et de l'étendue zone de contact entre le joint d'accouplement 30 et le tablier 7, ainsi que la maîtrise de la raideur dudit joint d'accouplement 30 vis-à-vis de la compression axiale.

En outre, un tel agencement permet au second anneau d'étanchéité 32, et plus globalement au joint d'accouplement 30, d'accommoder sans difficulté les variations ou les défauts d'assiette du tablier 7 par rapport au carter de direction 5 (et plus particulièrement par rapport au plateau terminal 33), puisque l'enfoncement (écrasement) élastique du second anneau d'étanchéité 32 peut varier selon l'azimut considéré autour de l'axe longitudinal L23, sans que la nappe 40 n'interfère avec ledit enfoncement.

L'agencement proposé garantit donc la qualité et la reproductibilité de l'étanchéité lors de l'accouplement du carter de direction 5 au tablier 7, quelles que soient les tolérances de fabrication et de montage du carter de direction 5 et du tablier 7.

A titre indicatif, l'épaisseur E32 du second anneau d'étanchéité pourra être sensiblement comprise entre 8 mm et 40 mm, tandis que l'épaisseur E40 de la nappe 40 pourra être sensiblement comprise entre 2 mm et 6 mm.

En outre, également à titre indicatif, la différence entre l'épaisseur E32 du second anneau d'étanchéité 32 et l'épaisseur E40 de la nappe 40, c'est-à-dire la hauteur axiale de la réserve de déformation propre au second anneau d'étanchéité 32, sera de préférence égale ou supérieure à 5 mm, et par exemple comprise entre 8 mm et 30 mm.

Dans l'absolu, il n'est pas exclu que le second anneau d'étanchéité 32 soit massif, c'est-à-dire formé d'un seul tenant, dans toute son épaisseur E32, par un bourrelet de matière plein.

Toutefois, de façon particulièrement préférentielle, et tel que cela est bien visible sur les figures 3, 4 et 8, le second anneau d'étanchéité 32, périphérique, est formé par un boudin tubulaire 41.

La cavité interne 42 du boudin tubulaire 41 pourra soit rester creuse (c'est-à-dire vide de matière), soit être remplie d'un matériau de remplissage souple, du genre mousse, avantageusement moins rigide (c'est-à-dire présentant un module d'Young inférieur, notamment en compression), et de préférence moins dense, que le matériau polymère constitutif de l'enveloppe du second anneau d'étanchéité 32 (et plus globalement que le matériau polymère constitutif du joint d'accouplement 30).

Avantageusement, un tel boudin tubulaire 41 formera une sorte de coussin combinant légèreté, grande souplesse, du fait d'une raideur axiale relativement faible (notamment inférieure à celle de la nappe 40 pleine, au moins en début de compression), et forte épaisseur E32, et par conséquent grande amplitude potentielle de déformation (notamment en compression axiale) en tout point de son pourtour.

Ici encore, le joint d'accouplement 30, par sa capacité à subir des déformations très variables en position (la déformation du boudin tubulaire 41 pouvant varier d'une position azimutale à l'autre, autour de l'axe longitudinal L23) et en amplitude (un même secteur azimutal du boudin tubulaire 41 pouvant accepter, en fonctions des besoins, différents degrés de déformation en compression axiale selon l'axe longitudinal L23), sera capable de compenser automatiquement, lors de l'assemblage, les défauts de surface du tablier 7 ou du carter de direction 5, ainsi que les variations d'assiette relative entre ces deux éléments.

De préférence, tel que cela est visible sur les figures 6 et 8, le premier anneau d'étanchéité 31 s'étend en saillie de la nappe 40 sur une première face 40I de ladite nappe (ici la face inférieure) orientée vers le carter de direction 5, tandis que le second anneau d'étanchéité 32 s'étend en saillie de la nappe 40 sur une seconde face 40S de la nappe (ici la face supérieure) orientée vers le tablier 7, à l'opposé du premier anneau d'étanchéité 31.

Ainsi, chacun des premier et second anneaux d'étanchéité 31, 32 s'étend respectivement en majorité voire en totalité d'un seul côté de la nappe 40, axialement à l'opposé de l'autre anneau d'étanchéité 32, 31.

Avantageusement, une telle répartition spatiale, en l'espèce une telle séparation axiale, facilite l'assemblage en deux temps du joint d'accouplement 30, puisque l'on peut d'abord monter le joint d'accouplement 30 sur le carter de direction 5, en engageant le premier anneau d'étanchéité 31 sur la colonne de direction 23 et en enfonçant le joint d'accouplement 30 jusqu'à ce que ledit joint d'accouplement 30 vienne en butée contre le plateau terminal 33 (par la face inférieure 32S du second anneau d'étanchéité 32 et/ou par la face inférieure 40S de la nappe 40), puis ensuite mettre en place le dispositif de direction 3 contre le tablier 7, en rapprochant le carter de direction 5 dudit tablier 7 jusqu'à ce que le second anneau d'étanchéité 32 vienne en appui contre ledit tablier 7, et ce sans que l'action du premier anneau d'étanchéité 31 sur la colonne de direction 23 n'interfère avec, ou ne soit perturbée par, l'action du second anneau d'étanchéité 32 contre le tablier 7.

De préférence, tel que cela est bien visible sur les figures 4 et 6, la nappe 40 présentera même, par rapport à sa face supérieure 40S et par rapport au second anneau d'étanchéité 32, une dépression axiale 43, formant une sorte de puits, au fond de laquelle se trouve (et s'ouvre) le premier anneau d'étanchéité 31.

Une telle disposition favorisera encore davantage le décalage axial entre les deux anneaux d'étanchéité 31, 32.

Selon une caractéristique préférentielle qui peut constituer une invention à part entière, le premier anneau d'étanchéité 31 est orienté selon un premier axe central L31, tandis que le second anneau d'étanchéité 32 est orienté selon un second axe central L32 qui présente, notamment au repos, avant compression du joint d'accouplement 30, une inclinaison θ non nulle par rapport au premier axe central L31, tel que cela est illustré sur la figure 8.

En d'autres termes, le premier axe central L31, selon lequel le premier anneau d'étanchéité 31 s'étend axialement, et qui coïncide, après assemblage, avec l'axe longitudinal L23 de la colonne de direction 23, n'est avantageusement pas parallèle au second axe central L32, selon lequel le second anneau d'étanchéité 32 s'étend axialement en épaisseur E32, et qui est perpendiculaire au plan formé par la face supérieure 32S dudit second anneau 32, c'est-à-dire perpendiculaire au plan contre lequel vient s'appliquer le tablier 7.

A titre indicatif, l'inclinaison θ pourra être égale ou supérieure à 1 degré, à 2 degrés, voire à 5 degrés.

Ladite inclinaison θ sera en outre de préférence inférieure ou égale à 45 degrés, et préférentiellement inférieure ou égale à 30 degrés, voire à 25 degrés.

En particulier, l'inclinaison θ pourra être comprise sensiblement entre 1 degré et 25 degrés, et plus particulièrement entre 2 degrés et 22 degrés.

Avantageusement, en conférant au joint d'accouplement 30, par construction, et avant assemblage et compression dudit joint d'accouplement 30 entre le tablier 7 et le carter de direction 5, une inclinaison θ non nulle, on préforme ledit joint d'accouplement 30 de telle manière que l'assiette du premier anneau d'étanchéité 31, qui est destiné à coopérer avec la colonne de direction 23, soit différente de l'assiette du second anneau d'étanchéité 32, qui est destiné à coopérer avec le tablier 7 (par sa face supérieure 32S) et avec le carter de direction 5 (par sa face inférieure 32I).

Ainsi, le joint d'accouplement 30 présente intrinsèquement, tel que cela est illustré sur la figure 8, une préforme inclinée, "en coin", qui correspond géométriquement à la configuration (prévisible) d'implantation du carter de direction 5 par rapport au tablier 7 au sein du véhicule 1, et qui assure à cet effet un "renvoi d'angle" (de valeur d'inclinaison θ) entre le premier axe central L31 du premier anneau d'étanchéité 31, et donc l'axe longitudinal L23 de la colonne de direction 23, d'une part, et le second axe central L32 du second anneau d'étanchéité 32, et donc la normale au plan du tablier 7, d'autre part.

Une telle préforme inclinée (ou "en coin"), qui correspond sensiblement à l'angle "naturel" que doit en principe former la colonne de direction 23 par rapport au tablier 7, facilite avantageusement la mise en place du joint d'accouplement 30 contre le tablier 7, et donc l'implantation du dispositif de direction 3 au sein du véhicule 1.

Plus globalement, un tel agencement incliné permet au joint d'accouplement 30 d'accommoder naturellement les orientations (prévisibles) de la colonne de direction 23 et du tablier 7, ce qui permet notamment d'homogénéiser la compression axiale (selon l'axe central L32) du second anneau d'étanchéité 32, en répartissant ladite compression axiale de manière sensiblement égale sur tout le pourtour dudit second anneau d'étanchéité (dans toutes les directions azimutales autour de l'axe central L32).

Avantageusement, l'invention permet en effet d'aligner la face supérieure 32S du second anneau d'étanchéité 32 avec le plan du tablier 7, tout en alignant l'axe central L31 du premier anneau d'étanchéité 31 sur l'axe longitudinal L23 de la colonne de direction 23, sans qu'il soit nécessaire de créer une compression axiale trop inégale du boudin 41 ou bien de forcer une trop forte déformation (notamment en flexion) de la nappe 40 pour adapter le joint d'accouplement 30 à l'alignement souhaité.

Au sein du joint d'accouplement 30, les contraintes internes dues à l'assemblage sont donc réduites, ce qui améliore la durée de vie dudit joint d'accouplement 30.

En pratique, la valeur de l'inclinaison θ (au repos) choisie pour le joint d'accouplement 30 sera de préférence sensiblement égale à la valeur prévisible de l'angle formé, par construction du véhicule 1, entre l'axe longitudinal L23 de la colonne de direction 23 et la normale au plan du tablier 7, ou, de manière équivalente, à la valeur prévisible de l'angle formé entre le plan du tablier 7 contre lequel doit s'appuyer le joint d'accouplement 30 et la partie du plateau terminal 33 traversée perpendiculairement par la colonne de direction 23.

De préférence, tel que cela est illustré sur la figure 6, le premier anneau d'étanchéité 31, central, étant raccordé au second anneau d'étanchéité 32, périphérique, au moyen d'une nappe 40 formée d'un seul tenant avec lesdits premier et second anneaux d'étanchéité 31, 32, tel que cela a été décrit plus haut, ladite nappe 40 présente, sur l'une de ses faces dite « première face » 40I (ici la face inférieure) qui est orientée vers le carter de direction 5 et repose en appui contre le carter de direction 5, au moins un ergot d'ancrage 44 élastique, distinct du premier anneau d'étanchéité 31, et qui coopère avec le carter de direction 5 par encliquetage pour retenir le joint d'accouplement 30 contre ledit carter de direction 5.

De préférence, l'ergot d'ancrage 44 est formé d'un seul tenant avec la nappe 40, et fait saillie sensiblement perpendiculairement à la première face (inférieure) 40I de cette dernière, sensiblement parallèlement à l'axe longitudinal L23.

Ledit ergot 44 pourra notamment présenter une forme de harpon élastique, comprenant une pointe suivie d'un élargissement formant un rebord d'arrêt, ce qui permettra l'enfoncement et l'ancrage dudit ergot 44 par encliquetage dans un trou de forme conjuguée percé dans le plateau terminal 33 du carter de direction 5.

De préférence, ledit ergot d'ancrage 44 sera placé radialement entre le premier anneau d'étanchéité 31 et le second anneau d'étanchéité 32, à distance de chacun de ces anneau d'étanchéité 31, 32, afin d'assurer une fixation de la nappe 40 sur le carter de direction 5 sans interférer avec le fonctionnement élastique desdits anneaux d'étanchéité 31, 32.

Avantageusement, l'ergot d'ancrage 44 permettra, à la manière d'un détrompeur (pion de centrage), de positionner de manière reproductible et précise le joint d'accouplement 30 sur le carter de direction 5, et assurera en outre la tenue dudit joint d'accouplement 30 sur ledit carter de direction 5, afin d'éviter toute chute ou tout déplacement préjudiciable dudit joint d'accouplement 30 pendant les manipulations dudit carter de direction 5 nécessaires à la mise en place du dispositif de direction 3 sur le véhicule 1, en vis-à-vis du tablier 7.

Bien entendu, le joint d'accouplement 30 pourra comprendre plusieurs ergots d'ancrage 44 tels que celui décrit plus haut, lesdits ergots d'ancrage 44 pouvant être avantageusement répartis en différents points de la face inférieure 40I de la nappe 40, pour améliorer la stabilité du joint d'accouplement 30 sur le plateau terminal 33.

Par ailleurs, le carter de direction 5 sera selon l'invention pourvu d'un organe de respiration 45 (figure 2) poreux et hydrophobe, perméable à l'air mais imperméable à l'eau (liquide), agencé pour permettre un équilibrage de pression entre l'intérieur du carter de direction 5, c'est-à-dire l'enceinte 29, et l'extérieur dudit carter de direction, c'est-à-dire typiquement l'habitacle 2 et/ou plus globalement l'atmosphère ambiante qui environne le véhicule 1.

Un tel organe de respiration 45 pourra par exemple être formé par une pastille en textile perméable à l'air et hydrophobe, de type Gore-Tex®.

Ledit organe de respiration 45 traversera la paroi du carter de direction 5, et plus particulièrement de la cloche 27, au niveau du plateau terminal 33.

Le joint d'accouplement 30 comprendra alors, entre le premier anneau d'étanchéité 31 et le second anneau d'étanchéité 32, un évent 46 qui traverse ledit joint d'accouplement 30 selon son épaisseur, en vis-à-vis de l'organe de respiration 45, afin de permettre des échanges gazeux entre le carter de direction 5 et l'habitacle du véhicule 2.

L'évent 46 se présentera sous la forme d'une découpe de la nappe 40, qui traverse de part en part ladite nappe 40 à l'aplomb axial de l'organe de respiration 45, de sorte à découvrir, voire à permettre le passage, dudit organe de respiration 45.

Avantageusement, le joint d'accouplement 30 assurera ainsi, toujours en conservant une forme très compacte, une troisième fonction (en sus de la première fonction d'étanchéité vis-à-vis de la colonne de direction 23 et de la seconde fonction d'étanchéité entre le carter de direction 5 et le tablier 7), à savoir l'étanchéité autour de l'organe de respiration 45 qui permet la respiration de l'enceinte 29.

A ce titre, on notera que, l'évent 46 étant avantageusement situé radialement dans l'espace protégé compris entre le premier anneau d'étanchéité 31 d'une part, et le second anneau d'étanchéité 32 d'autre part, ledit évent 46 bénéficie de la protection, et donc de l'étanchéité, procurée par ces anneaux d'étanchéité 31, 32.

En outre, la face inférieure 40I de la portion de nappe 40 pleine, qui entoure l'évent 46, est avantageusement appliquée contre le carter de direction 5 de manière à épouser la forme du plateau terminal 33, ce qui renforce ladite étanchéité autour dudit évent 46.

Bien entendu, l'invention n'est nullement limitée aux seules variantes de réalisation susmentionnées, l'homme du métier étant notamment à même d'isoler ou de combiner librement l'une ou l'autre des caractéristiques décrites dans ce qui précède, ou de leur substituer des équivalents.

En particulier, l'invention porte également sur un joint d'accouplement 30 en tant que tel, qui présente tout ou partie des caractéristiques décrites plus haut, et qui est donc adapté à la réalisation d'un accouplement étanche entre un carter de direction 5 et un tablier 7 de véhicule 1.

De même, l'invention concerne bien entendu un procédé d'assemblage d'un dispositif de direction 3 au sein d'un véhicule 1 au moyen d'un joint d'accouplement 30 selon l'invention.

Ainsi, l'invention porte en tant que tel sur un procédé d'assemblage d'un dispositif de direction 3, comprenant un mécanisme de direction 4 protégé par un carter de direction 5, dans un compartiment 6 d'un véhicule, tel qu'un compartiment moteur, qui est séparé de l'habitacle 2 par au moins une cloison dite "tablier" 7, le mécanisme de direction 4 comprenant une colonne de direction 23 qui émerge du carter de direction 5 et qui doit traverser le tablier 7 pour être raccordée à un volant de conduite 22, ledit procédé comportant une étape au cours de laquelle on met en place, pour assurer l'étanchéité autour de la colonne de direction 23, entre le carter de direction 5 et le tablier 7, un joint d'accouplement 30 en matériau élastomère qui comprend d'un seul tenant d'une part un premier anneau d'étanchéité 31, central, qui entoure et enserre ladite colonne de direction 23 et à travers lequel la colonne de direction 23 traverse le joint d'accouplement 30, et d'autre part un second anneau d'étanchéité 32, périphérique, qui est interposé entre le carter de direction 5 et le tablier 7, à distance et autour du premier anneau d'étanchéité 31, en enfilant le joint d'accouplement sur la colonne de direction par le premier anneau d'étanchéité puis en faisant glisser ledit joint d'accouplement le long de la colonne de direction.

Plus particulièrement, et selon une caractéristique qui peut constituer une invention à part entière, ledit procédé comporte, comme cela a été dit plus haut, une étape au cours de laquelle on monte tout d'abord sur le carter de direction 5, pour assurer l'étanchéité autour de la colonne de direction 23, entre le carter de direction 5 et le tablier 7, le joint d'accouplement 30 en matériau élastomère qui comprend d'un seul tenant d'une part un premier anneau d'étanchéité 31, central, et d'autre part un second anneau d'étanchéité 32, périphérique, ledit joint d'accouplement 30 étant monté sur le carter de direction 5 en engageant le premier anneau d'étanchéité 31 sur la colonne de direction 23, de manière à ce que ledit premier anneau d'étanchéité 31 entoure et enserre ladite colonne de direction 23 en permettant à ladite colonne de direction 23 de traverser le joint d'accouplement 30, et en enfonçant le joint d'accouplement 30 jusqu'à ce que ledit joint d'accouplement 30 vienne en butée contre un plateau terminal 33 dudit carter de direction 5, puis on met ensuite en place le dispositif de direction 3 contre le tablier 7, en rapprochant le carter de direction 5 dudit tablier 7 jusqu'à ce que le second anneau d'étanchéité 32 vienne en appui contre ledit tablier 7 et soit pris en sandwich entre le plateau terminal 33 du carter de direction 5 et le tablier 7, à distance et autour du premier anneau d'étanchéité 31.

On notera que le procédé susmentionné peut de préférence s'appliquer, tel que cela a été indiqué plus haut, à un carter de direction 5 qui est formé par une coque obtenue en réunissant une portion de coque inférieure, formant embase 26, et une portion de coque supérieure en matériau polymère, formant cloche 27, qui vient coiffer ladite embase 26, le plateau terminal 33 du carter de direction 5 formant avantageusement le plateau terminal d'une cheminée 34 qui est formée d'un seul tenant avec ladite cloche 27 et qui s'étend le long et autour de la colonne de direction 23.

## Revendications

1. Véhicule (1) comprenant un habitacle (2) destiné à accueillir au moins un conducteur, ledit véhicule étant équipé d'un dispositif de direction (3) qui comprend un mécanisme de direction (4) protégé par un carter de direction (5), ledit carter de direction étant lui-même logé dans un compartiment (6) du véhicule, tel qu'un compartiment moteur, qui est séparé de l'habitacle (2) par au moins une cloison dite "tablier" (7), le dispositif de direction (3) comprenant également un volant de conduite (22), situé dans l'habitacle, volant de conduite (22) auquel le mécanisme de direction (4) est raccordé au moyen d'une colonne de direction (23) qui émerge du carter de direction (5) et qui traverse le tablier (7), ledit véhicule étant **caractérisé en ce qu'**il comporte, pour assurer l'étanchéité autour de la colonne de direction (23), entre le carter de direction (5) et le tablier (7), un joint d'accouplement (30) en matériau élastomère qui comprend d'un seul tenant d'une part un premier anneau d'étanchéité (31), central, qui entoure et enserre ladite colonne de direction (23) et à travers lequel la colonne de direction (23) traverse le joint d'accouplement (30), et d'autre part un second anneau d'étanchéité (32), périphérique, qui est interposé entre le carter de direction (5) et le tablier (7), à distance et autour du premier anneau d'étanchéité (31), et **en ce que** le carter de direction (5) étant pourvu d'un organe de respiration (45) poreux et hydrophobe, perméable à l'air mais imperméable à l'eau, agencé pour permettre un équilibrage de pression entre l'intérieur du carter de direction (5) et l'extérieur dudit carter de direction, le joint d'accouplement (30) comprend, entre le premier anneau d'étanchéité (31) et le second anneau d'étanchéité (32), un évent (46) qui traverse ledit joint d'accouplement (30) selon son épaisseur, en vis-à-vis de l'organe de respiration (45), afin de permettre des échanges gazeux entre le carter de direction (5) et l'habitacle (2) du véhicule.

2. Véhicule selon la revendication 1 **caractérisé en ce que** le premier anneau d'étanchéité (31), central, forme un joint racleur au contact et à l'intérieur duquel la colonne de direction (23) peut se déplacer au moins en rotation en lacet, autour de son axe longitudinal (L23).

3. Véhicule selon la revendication 1 ou 2 **caractérisé en ce que** le premier anneau d'étanchéité (31), central, forme un joint à lèvre(s), dont la ou les lèvres (35, 36) viennent frotter contre la surface externe de la colonne de direction (23).

4. Véhicule selon la revendication 3 **caractérisé en ce que** le premier anneau d'étanchéité présente deux lèvres (35, 36), qui correspondent chacune à une portion d'hémisphère d'une même zone sphérique (37).

5. Véhicule selon l'une des revendications précédentes **caractérisé en ce que** le premier anneau d'étanchéité (31), central, est raccordé au second anneau d'étanchéité (32), périphérique, par une nappe (40) qui est d'une épaisseur (E40) moindre que l'épaisseur (E32) dudit second anneau d'étanchéité (32) périphérique.

6. Véhicule selon la revendication 5 **caractérisé en ce que** le premier anneau d'étanchéité (31) s'étend en saillie de la nappe (40) sur une première face (40I) de ladite nappe orientée vers le carter de direction (5), tandis que le second anneau d'étanchéité (32) s'étend en saillie de la nappe sur une seconde face (40S) de la nappe orientée vers le tablier (7), à l'opposé du premier anneau d'étanchéité (31).

7. Véhicule selon l'une des revendications précédentes **caractérisé en ce que** le premier anneau d'étanchéité (31) est orienté selon un premier axe central (L31), et **en ce que** le second anneau d'étanchéité (32) est orienté selon un second axe central (L32) qui présente une inclinaison (θ) non nulle par rapport au premier axe central (L31).

8. Véhicule selon l'une des revendications précédentes **caractérisé en ce que** le premier anneau d'étanchéité (31), central, est raccordé au second anneau d'étanchéité (32), périphérique, au moyen d'une nappe (40) formée d'un seul tenant avec lesdits premier et second anneaux d'étanchéité, et **en ce que** la nappe (40) présente, sur l'une de ses faces dite « première face » (40I) qui est orientée vers et repose en appui contre le carter de direction (5), au moins un ergot d'ancrage (44) élastique, distinct du premier anneau d'étanchéité (31), et qui coopère avec le carter de direction (5) par encliquetage pour retenir le joint d'accouplement (30) contre ledit carter de direction (5).

9. Véhicule selon l'une des revendications précédentes **caractérisé en ce que** le second anneau d'étanchéité (32), périphérique, est formé par un boudin tubulaire (41).

10. Procédé d'assemblage d'un dispositif de direction (3), comprenant un mécanisme de direction (4) protégé par un carter de direction (5), dans un compartiment (6) d'un véhicule selon l'une des revendications précédentes, tel qu'un compartiment moteur, qui est séparé de l'habitacle (2) par au moins une cloison dite "tablier" (7), le mécanisme de direction (4) comprenant une colonne de direction (23) qui émerge du carter de direction (5) et qui doit traverser le tablier (7) pour être raccordée à un volant de conduite (22), ledit procédé étant **caractérisé en ce qu'**il comporte une étape au cours de laquelle on met en place, pour assurer l'étanchéité autour de la colonne de direction (23), entre le carter de direction (5) et le tablier (7), un joint d'accouplement (30) en matériau élastomère qui comprend d'un seul tenant d'une part un premier anneau d'étanchéité (31), central, qui entoure et enserre ladite colonne de direction (23) et à travers lequel la colonne de direction (23) traverse le joint d'accouplement (30), et d'autre part un second anneau d'étanchéité (32), périphérique, qui est interposé entre le carter de direction (5) et le tablier (7), à distance et autour du premier anneau d'étanchéité (31), en enfilant le joint d'accouplement sur la colonne de direction par le premier anneau d'étanchéité puis en faisant glisser ledit joint d'accouplement le long de la colonne de direction.

11. Procédé selon la revendication 10 **caractérisé en ce qu'**il comporte une étape au cours de laquelle on monte tout d'abord sur le carter de direction (5), pour assurer l'étanchéité autour de la colonne de direction (23), entre le carter de direction (5) et le tablier (7), le joint d'accouplement (30) en matériau élastomère qui comprend d'un seul tenant d'une part un premier anneau d'étanchéité (31), central, et d'autre part un second anneau d'étanchéité (32), périphérique, ledit joint d'accouplement (30) étant monté sur le carter de direction (5) en engageant le premier anneau d'étanchéité (31) sur la colonne de direction (23), de manière à ce que ledit premier anneau d'étanchéité (31) entoure et enserre ladite colonne de direction (23) en permettant à ladite colonne de direction (23) de traverser le joint d'accouplement (30), et en enfonçant le joint d'accouplement (30) jusqu'à ce que ledit joint d'accouplement (30) vienne en butée contre un plateau terminal (33) dudit carter de direction (5), puis on met ensuite en place le dispositif de direction (3) contre le tablier (7), en rapprochant le carter de direction (5) dudit tablier (7) jusqu'à ce que le second anneau d'étanchéité (32) vienne en appui contre ledit tablier (7) et soit pris en sandwich entre le plateau terminal (33) du carter de direction (5) et le tablier (7), à distance et autour du premier anneau d'étanchéité (31).

12. Procédé selon la revendication 10 ou 11 **caractérisé en ce que** le carter de direction (5) est formé par une coque obtenue en réunissant une portion de coque inférieure, formant embase (26), et une portion de coque supérieure en matériau polymère, formant cloche (27), qui vient coiffer ladite embase (26), et **en ce que** le plateau terminal (33) du carter de direction (5) forme le plateau terminal d'une cheminée (34) qui est formée d'un seul tenant avec ladite cloche (27) et qui s'étend le long et autour de la colonne de direction (23).

## Patentansprüche

1. Fahrzeug (1), ein Wageninneres (2) umfassend, das dazu bestimmt ist, mindestens einen Lenker zu empfangen, wobei das Fahrzeug mit einer Lenkvorrichtung (3) ausgerüstet ist, die einen Lenkmechanismus (4) umfasst, der durch ein Lenkgehäuse (5) geschützt ist, wobei das Lenkgehäuse selbst in einem Raum (6) des Fahrzeugs, wie einem Motorraum, aufgenommen ist, der von dem Wageninneren (2) durch mindestens eine "Spritzwand" (7) genannte Wand getrennt ist, wobei die Lenkvorrichtung (3) ebenfalls ein Lenkrad (22) umfasst, das sich in dem Wageninneren befindet, Lenkrad (22), mit dem der Lenkmechanismus (4) durch eine Lenksäule (23) verbunden ist, die aus dem Lenkgehäuse (5) hervortritt, und die die Spritzwand (7) durchquert, wobei das Fahrzeug **dadurch gekennzeichnet ist, dass** es, um für die Dichtung um die Lenksäule (23) herum zu sorgen, zwischen dem Lenkgehäuse (5) und der Spritzwand (7) eine Ankopplungsdichtung (30) aus einem Elastomer-Material beinhaltet, die in einem Stück einerseits einen ersten mittleren Dichtungsring (31), der die Lenksäule (23) umgibt und einschließt, und durch den die Lenksäule (23) die Ankopplungsdichtung (30) durchquert, und andererseits einen zweiten peripheren Dichtungsring (32) umfasst, der zwischen dem Lenkgehäuse (5) und der Spritzwand (7), auf Abstand und um den ersten Dichtungsring (31) herum eingesetzt ist, und dadurch, dass die Ankopplungsdichtung (30), da das Lenkgehäuse (5) mit einem porösen und wasserabweisenden, luftdurchlässigen jedoch wasserundurchlässigen Atmungsorgan (45) versehen ist, das angeordnet ist, um einen Druckausgleich zwischen dem Inneren des Lenkgehäuses (5) und dem Äußeren des Lenkgehäuses zu ermöglichen, zwischen dem ersten Dichtungsring (31) und dem zweiten Dichtungsring (32) eine Belüftungsöffnung (46) umfasst, die die Ankopplungsdichtung (30) in ihrer Dicke gegenüber dem Atmungsorgan (45) durchquert, um Gasaustausch zwischen dem Lenkgehäuse (5) und dem Wageninneren (2) des Fahrzeugs zu ermöglichen.

2. Fahrzeug nach Anspruch 1, **dadurch gekennzeichnet, dass** der erste mittlere Dichtungsring (31) eine Abstreifdichtung bildet, in Kontakt mit der und im Inneren derer sich die Lenksäule (23) mindestens in Schleifendrehung um ihre Längsachse (L23) bewegen kann.

3. Fahrzeug nach Anspruch 1 oder 2, **dadurch gekennzeichnet, dass** der erste mittlere Dichtungsring (31) eine Lippendichtung bildet, deren Lippe oder Lippen (35, 36) sich an der Außenfläche der Lenksäule (23) reiben.

4. Fahrzeug nach Anspruch 3, **dadurch gekennzeichnet, dass** der erste Dichtungsring zwei Lippen (35, 36) aufweist, die jeweils einem Halbkreisabschnitt einer selben kreisförmigen Zone (37) entsprechen.

5. Fahrzeug nach einem der vorstehenden Ansprüche, **dadurch gekennzeichnet, dass** der erste mittlere Dichtungsring (31) mit dem zweiten peripheren Dichtungsring (32) durch eine Einlage (40) verbunden ist, die von einer Dicke (E40) kleiner als die Dicke (E32) des zweiten peripheren Dichtungsrings (32) ist.

6. Fahrzeug nach Anspruch 5, **dadurch gekennzeichnet, dass** sich der erste Dichtungsring (31) auf einer ersten Seite (40I) der Einlage aus der Einlage (40) erstreckt, die zum Lenkgehäuse (5) gerichtet ist, während sich der zweite Dichtungsring (32) auf einer zweiten Seite (40S) der Einlage aus der Einlage erstreckt, die, entgegengesetzt zu dem ersten Dichtungsring (31) zur Spritzwand (7) gerichtet ist.

7. Fahrzeug nach einem der vorstehenden Ansprüche, **dadurch gekennzeichnet, dass** der erste Dichtungsring (31) entlang einer ersten mittleren Achse (L31) gerichtet ist, und dadurch, dass der zweite Dichtungsring (32) entlang einer zweiten mittleren Achse (L32) gerichtet ist, die eine Neigung (θ) ungleich null im Verhältnis zu der ersten mittleren Achse (L31) aufweist.

8. Fahrzeug nach einem der vorstehenden Ansprüche, **dadurch gekennzeichnet, dass** der erste mittlere Dichtungsring (31) durch eine Einlage (40) mit dem zweiten peripheren Dichtungsring (32) verbunden ist, die in einem Stück mit dem ersten und zweiten Dichtungsring gebildet ist, und dadurch dass die Einlage (40) auf einer ihrer "erste Seite" (40I) genannten Seiten, die zu dem Lenkgehäuse (5) gerichtet ist und daran anliegt, mindestens eine elastische Verankerungsnase (44) aufweist, die von dem ersten Dichtungsring (31) verschieden ist, und die durch Einrasten mit dem Lenkgehäuse (5) zusammenwirkt, um die Ankopplungsdichtung (30) an dem Lenkgehäuse (5) zurückzuhalten.

9. Fahrzeug nach einem der vorstehenden Ansprüche, **dadurch gekennzeichnet, dass** der zweite periphere Dichtungsring (32) durch einen röhrenförmigen Wulst (41) gebildet wird.

10. Verfahren zum Zusammensetzen einer Lenkvorrichtung (3), einen Lenkmechanismus (4) umfassend, der durch ein Lenkgehäuse (5) geschützt ist, in einem Raum (6) eines Fahrzeugs nach einem der vorstehenden Ansprüche, wie einem Motorraum, der von dem Wageninneren (2) durch mindestens eine "Spritzwand" (7) genannte Wand getrennt ist, wobei der Lenkmechanismus (4) eine Lenksäule (23) umfasst, die aus dem Lenkgehäuse (5) hervortritt, und die die Spritzwand (7) durchqueren muss, um mit einem Lenkrad (22) verbunden zu werden, wobei das Verfahren **dadurch gekennzeichnet ist, dass** einen Schritt beinhaltet, bei dem man, um für die Dichtung um die Lenksäule (23) herum zu sorgen, zwischen dem Lenkgehäuse (5) und der Spritzwand (7) eine Ankopplungsdichtung (30) aus einem Elastomer-Material anbringt, die in einem Stück einerseits einen ersten mittleren Dichtungsring (31), der die Lenksäule (23) umgibt und einschließt, und durch den die Lenksäule (23) die Ankopplungsdichtung (30) durchquert, und andererseits einen zweiten peripheren Dichtungsring (32) umfasst, der zwischen dem Lenkgehäuse (5) und der Spritzwand (7), auf Abstand und um den ersten Dichtungsring (31) herum eingesetzt ist, indem man die Ankopplungsdichtung durch den ersten Dichtungsring auf die Lenksäule aufschiebt und die Ankopplungsdichtung danach entlang der Lenksäule gleiten lässt.

11. Verfahren nach Anspruch 10, **dadurch gekennzeichnet, dass** es einen Schritt beinhaltet, bei dem man zuerst auf dem Lenkgehäuse (5), um für die Dichtung um die Lenksäule (23) herum zu sorgen, zwischen dem Lenkgehäuse (5) und der Spritzwand (7) die Ankopplungsdichtung (30) aus Elastomer-Material montiert, die in einem Stück einerseits einen ersten mittleren Dichtungsring (31), und andererseits einen zweiten peripheren Dichtungsring (32) umfasst, wobei die Ankopplungsdichtung (30) auf dem Lenkgehäuse (5) montiert wird, indem man den ersten Dichtungsring (31) auf die Lenksäule (23) aufschiebt, sodass der erste Dichtungsring (31) die Lenksäule (23) umgibt und einschließt, indem man es der Lenksäule (23) ermöglicht, die Ankopplungsdichtung (30) zu durchqueren, und indem man die Ankopplungsdichtung (30) eindrückt, bis die Ankopplungsdichtung (30) auf Anschlag an eine Abschlussplatte (33) des Lenkgehäuses (5) kommt, und man danach die Lenkvorrichtung (3) an der Spritzwand (7) anbringt, indem man das Lenkgehäuse (5) an die Spritzwand (7) annähert, bis der zweite Dichtungsring (32) an der Spritzwand (7) anliegt, und zwischen der Abschlussplatte (33) des Lenkgehäuses (5) und der Spritzwand (7) auf Abstand und um den ersten Dichtungsring (31) herum sandwichartig aufgenommen wird.

12. Verfahren nach Anspruch 10 oder 11, **dadurch gekennzeichnet, dass** das Lenkgehäuse (5) durch eine Schale gebildet wird, die man erhält, indem man einen unteren Schalenabschnitt, der eine Basis (26) bildet, und einen oberen Schalenabschnitt aus einem Polymer-Material, der eine Glocke (27) bildet, die die Basis (26) abdeckt, zusammenfügt, und dadurch, dass die Abschlussplatte (33) des Lenkgehäuses (5) die Abschlussplatte eines Schachtes (34) bildet, der in einem Stück mit der Glocke (27) gebildet ist, und der sich entlang und um die Lenksäule (23) herum erstreckt.

## Claims

1. A vehicle (1) comprising a passenger compartment (2) intended to accommodate at least one driver, said vehicle being equipped with a steering device (3) which comprises a steering mechanism (4) protected by a steering casing (5), said steering casing being itself housed in a compartment (6) of the vehicle, such as an engine compartment, which is separated from the passenger compartment (2) by at least one partition wall called "bulkhead" (7), the steering device (3) also comprising a steering wheel (22), located in the passenger compartment, steering wheel (22) to which the steering mechanism (4) is connected by means of a steering column (23) which emerges from the steering casing (5) and which crosses the bulkhead (7), said vehicle being **characterized in that** it includes, in order to ensure the sealing around the steering column (23), between the steering casing (5) and the bulkhead (7), a coupling seal (30) made of elastomer material which comprises, integrally, on the one hand, a first central sealing ring (31) which surrounds and clasps said steering column (23) and through which the steering column (23) passes across the coupling seal (30) and, on the other hand, a second peripheral sealing ring (32) which is interposed between the steering casing (5) and the bulkhead (7), at a distance and around the first sealing ring (31), and **in that**, the steering casing (5) being provided with a porous and hydrophobic breathing member (45), permeable to air but impermeable to water, arranged to allow a pressure balancing between the inside of the steering casing (5) and the outside of said steering casing, the coupling seal (30) comprises, between the first sealing ring (31) and the second sealing ring (32), a vent (46) which passes across said coupling seal (30) according to its thickness, vis-à-vis the breathing member (45), in order to allow gaseous exchanges between the steering casing (5) and the passenger compartment (2) of the vehicle.

2. The vehicle according to claim 1, **characterized in that** the first central sealing ring (31) forms a wiper seal in contact and inside which the steering column (23) may be displaced at least in yaw rotation, about its longitudinal axis (L23).

3. The vehicle according to claim 1 or 2 **characterized in that** the first central sealing ring (31) forms a lip seal, whose lip(s) (35, 36) rub(s) against the outer surface of the steering column (23).

4. The vehicle according to claim 3 **characterized in that** the first sealing ring has two lips (35, 36), which correspond each to a hemisphere portion of the same spherical zone (37).

5. The vehicle according to any of the preceding claims **characterized in that** the first central sealing ring (31) is connected to the second peripheral sealing ring (32) by a layer (40) which is of a thickness (E40) less than the thickness (E32) of said second peripheral sealing ring (32).

6. The vehicle according to claim 5 **characterized in that** the first sealing ring (31) protrudes from the layer (40) on a first face (401) of said layer oriented toward the steering casing (5), while the second sealing ring (32) protrudes from the layer on a second face (40S) of the layer oriented towards the bulkhead (7), opposite the first sealing ring (31).

7. The vehicle according to any of the preceding claims **characterized in that** the first sealing ring (31) is oriented along a first central axis (L31), and **in that** the second sealing ring (32) is oriented according to a second central axis (L32) which has a non-zero inclination (θ) relative to the first central axis (L31).

8. The vehicle according to any of the preceding claims **characterized in that** the first central sealing ring (31) is connected to the second peripheral sealing ring (32) by means of a layer (40) formed integrally with said first and second sealing rings and **in that** the layer (40) has, on one of its faces called « first face » (401) which is oriented toward and bears against the steering casing (5), at least one elastic anchoring lug (44), distinct from the first sealing ring (31), and which cooperates with the steering casing (5) by snap-fitting in order to retain the coupling seal (30) against said steering casing (5).

9. The vehicle according to any of the preceding claims **characterized in that**, the second peripheral sealing ring (32) is formed by a tubular bulb (41).

10. A method for assembling a steering device (3), comprising a steering mechanism (4) protected by a steering casing (5), in a compartment (6) of a vehicle according to any of the preceding claims, such as an engine compartment, which is separated from the passenger compartment (2) by at least one partition wall called "bulkhead" (7), the steering mechanism (4) comprising a steering column (23) which emerges from the steering casing (5) and which should pass across the bulkhead (7) to be connected to a steering wheel (22), said method being **characterized in that** it includes a step comprising placing, in order to ensure the sealing around the steering column (23), between the steering casing (5) and the bulkhead (7), a coupling seal (30) made of elastomer material which comprises integrally, on the one hand, a first central sealing ring (31) which surrounds and clasps said steering column (23) and through which the steering column (23) passes across the coupling seal (30) and, on the other hand, a second peripheral sealing ring (32) which is interposed between the steering casing (5) and the bulkhead (7), at a distance and around the first sealing ring (31), by putting the coupling seal around the steering column on the first sealing ring then by dragging said coupling seal along the steering column.

11. The method according to claim 10 **characterized in that** it includes a step comprising firstly mounting on the steering casing (5), in order to ensure the sealing around the steering column (23), between the steering casing (5) and the bulkhead (7), the coupling seal (30) made of elastomer material which comprises integrally, on the one hand, a first central sealing ring (31) and, on the other hand, a second peripheral sealing ring (32), said coupling seal (30) being mounted on the steering casing (5) by engaging the first sealing ring (31) on the steering column (23), so that said first sealing ring (31) surrounds and clasps said steering column (23) allowing said steering column (23) to pass across the coupling seal (30), and depressing the coupling seal (30) until said coupling seal (30) abuts against an endplate (33) of said steering casing (5), and then comprising placing the steering device (3) against the bulkhead (7), by bringing the steering casing (5) closer to said bulkhead (7) until the second sealing ring (32) bears against said bulkhead (7) and is sandwiched between the endplate (33) of the steering casing (5) and the bulkhead (7), at a distance and around the first sealing ring (31).

12. The method according to claim 10 or 11 **characterized in that** the steering casing (5) is formed by a shell obtained by joining a lower shell portion, forming a base (26), and an upper shell portion made of polymer material, forming a bell-housing (27), which covers said base (26), and **in that** the endplate (33) of the steering casing (5) forms the endplate of a chimney (34) which is formed integrally with said bell-housing (27) and which extends along and around the steering column (23).
